# DEMANDE DE BREVET EUROPEEN

(11) **EP 4 603 240 A1**
(43) Date de publication de la demande: **20.08.2025**
(21) Numéro de dépôt: 25157555.1
(22) Date de dépôt: 13.02.2025
(51) Int. Cl.: B26D 1/06, B65B 69/00, F16F 1/02, F16F 1/18

(54) **CHARIOT COUPE LIEN ET PROCÉDÉ DE DÉCOUPE D'UN LIEN**

(30) Priorité: 15.02.2024 FR 2401476
(71) Demandeur: Sidel Participations, 76930 Octeville-sur-Mer (FR)
(72) Inventeur: BORNARD, Guillaume, 21910 CORCELLES-LES-CITEAUX (FR); POITOUT, Florent, 21910 CORCELLES-LES-CITEAUX (FR); SERGENT, Jérôme, 21910 CORCELLES-LES-CITEAUX (FR)
(74) Mandataire: Sidel Group

(57) **Abrégé**

Un aspect de l'invention concerne un chariot coupe lien (200) pour couper un lien (32) entourant un lot d'éléments (30) comprenant :
- un châssis de déplacement (202) et un châssis de découpe (204),
- une languette d'écartement (210) montée solidaire sur le châssis de découpe et comprenant une surface de rampe (212) comprenant une extrémité avant (210A) configurée pour glisser entre un lien et une surface de référence (30A) du lot d'éléments de sorte que la surface de rampe écarte le lien de la surface de référence lors du déplacement du châssis de déplacement,
- un guide (220) monté solidaire sur le châssis de découpe pour guider l'extrémité avant de la languette par rapport à la surface de référence,
- un détecteur de présence (230) d'un lien qui est en contact avec la languette, et
- une lame de coupe (240) configurée pour couper le lien.

## Description

### DOMAINE TECHNIQUE DE L'INVENTION

La présente invention se rapporte au domaine du conditionnement de lots d'éléments entourés par un lien, et plus particulièrement à la découpe du lien.

La présente invention concerne plus particulièrement un chariot coupe lien, une machine comprenant un tel chariot et un procédé de découpe d'un lien entourant un lot d'éléments, tel qu'un lot de cartons sous forme de plaques planes.

### ARRIERE-PLAN TECHNOLOGIQUE DE L'INVENTION

Il existe des chariots pour couper un lien entourant un lot d'éléments comprenant :
- un moyen de découpe configuré pour couper le lien,
- un moyen de localisation configuré pour localiser le lien à couper et ainsi guider le moyen de découpe jusqu'au lien.

Classiquement, le moyen de localisation est sous la forme d'une caméra permettant d'identifier visuellement le lien pour le localiser. Un tel moyen de localisation présente certains inconvénients. En effet l'identification du lien est visuelle et dépend de son aspect physique notamment de sa différence de couleur par rapport à la surface de l'élément retenu par le lien. Ainsi, dans le cas d'une couleur proche ou identique entre celle du lien et de celle de la surface de l'élément, ou encore dans le cas de la présence d'une bande colorée sur la surface de l'élément, le moyen de localisation peut être confronté à des erreurs de localisation ou à l'impossibilité d'identifier le lien. Par exemple, il très difficile pour ce type de moyen de localisation d'identifier un lien de couleur blanche sur une surface de couleur blanche du lot d'éléments.

Le lien permet de maintenir les différents éléments les uns contre les autres, par exemple des découpes cartonnées, des cartons, notamment dans un état déplié, afin de les transporter d'une première zone, par exemple depuis une palette, à une deuxième zone, par exemple un magasin de chargement d'éléments, sans qu'un élément ne tombe lors du transport.

Classiquement, la découpe du lien est réalisée avant qu'une machine d'extraction, par exemple divulguée dans le document WO2017072428, ne déplace les éléments de la palette pour les positionner dans un magasin de stockage d'une machine de traitement, de type encaisseuse ou formeuse de caisses, en pliant chaque carton de leur état plat à leur état monté.

Le moyen de découpe est donc généralement un appareil indépendant de la machine d'extraction configurée pour déplacer le lot d'éléments retenus par le lien de la palette jusqu'à un magasin de stockage. L'utilisation de plusieurs appareils ou machines impliquent un coût important.

La machine d'extraction est configurée pour déplacer des éléments :
- à l'unité, un élément après l'autre au moyen d'un dispositif de ventouse, ce qui présente un temps d'extraction sensiblement élevé et implique un coût de production important, ou
- par lot, en divisant les piles en plusieurs lots d'éléments, par un moyen de préhension sous la forme d'un étau nécessitant en outre un moyen de séparation des différents lots d'éléments configuré pour séparer deux lots d'éléments l'un par rapport à l'autre, en s'interposant entre les deux.

Une solution envisageable est d'utiliser le lien pour extraire les lots d'éléments de la pile, par exemple sous la forme d'une pile de cartons plats, mais cela nécessite d'utiliser un deuxième lien croisé perpendiculairement avec le premier lien ce qui implique, d'une part deux découpes de liens, et d'autre part une augmentation du nombre de liens utilisés et donc une augmentation du coût total.

Il existe des machines d'extraction, tel que celle décrite dans le document WO2017001749, comprenant une pince qui prend la forme d'un étau piloté qu'il convient de fermer une fois qu'il entoure le lien. Le lien doit donc être préalablement localisé pour pouvoir être pincé, notamment par une caméra. La machine comprend en outre un moyen de découpe comprenant une lame tranchante mobile qui vient couper le lien alors qu'il est pris dans ledit étau. La machine a donc une pince pour saisir le lien, ainsi qu'un moyen de découpe qui tranche le lien alors qu'il est saisi par la pince. Le moyen de découpe comprend encore un bec pointu pour venir entre le lien et le lot d'éléments, ce bec formant éventuellement une mâchoire de la pince. Cependant, cette machine nécessite de localiser précisément le lien avant de le pincer, ce qui peut poser des problèmes dans le cas d'un lien de couleur proche de celle de la surface de référence du lot d'éléments, ou encore en fonction de la lumière extérieure qui peut impacter la visibilité du lien.

Il existe donc un besoin d'un système plus simple et moins coûteux, utilisant un seul lien pour retenir un lot d'éléments, et un moyen de découpe présentant un coût minimisé et dont le fonctionnement est versatile, permettant de s'adapter à tout type de lien.

### RESUME DE L'INVENTION

L'invention offre une solution pour découper un lien entourant un lot d'éléments en proposant un chariot coupe lien.

Un premier aspect de l'invention concerne un chariot coupe lien pour couper un lien entourant un lot d'éléments comprenant :
- un châssis de déplacement,
- un châssis de découpe mobile par rapport au châssis de déplacement,
- une languette d'écartement montée solidaire sur le châssis de découpe et comprenant une surface de rampe s'étendant d'une extrémité avant à une extrémité arrière de la languette d'écartement, l'extrémité avant étant configurée pour glisser entre un lien et une surface de référence du lot d'éléments de sorte que la surface de rampe écarte le lien de la surface de référence du lot d'éléments lors du déplacement du châssis de déplacement,
- un guide monté solidaire à l'avant sur le châssis de découpe pour guider et adapter l'orientation de l'extrémité avant de la languette d'écartement par rapport à la surface de référence afin de faciliter l'insertion de la languette d'écartement entre le lien et la surface de référence,
- un détecteur de présence d'un lien configuré pour détecter le lien lorsqu'il est en contact avec la surface de rampe de la languette d'écartement, et
- une lame de coupe configurée pour couper le lien.

Le chariot coupe lien selon l'invention permet avantageusement de se dispenser d'un moyen de localisation additionnel d'un lien. En d'autres termes, il n'est pas nécessaire de localiser le lien préalablement à la saisie du lot d'éléments. En effet, le chariot coupe lien permet de déplacer à l'aveugle, c'est-à-dire sans localisation précise du lien préalablement à la détection du lien sur la languette d'écartement. La languette d'écartement vient s'interposer en le lien et la surface de référence d'un lot d'éléments et permet ainsi la détection du lien par le détecteur de présence. En effet, le lien étant toujours positionné autour du lot d'éléments, l'extrémité avant de la languette d'écartement glisse sur la surface de référence grâce au guide et au châssis de découpe articulé par rapport au châssis de déplacement. Le guide et l'articulation du châssis de découpe permettent d'orienter la languette d'écartement selon un angle par rapport à la surface de référence. De plus, le châssis de déplacement permet de déplacer le châssis de découpe et donc la languette d'écartement sur cette surface de référence en s'adaptant à sa forme qu'elle soit concave ou convexe. Grâce à l'utilisation du détecteur de présence, la détection du lien est réalisée par un contact mécanique du lien avec la surface de la rampe de la languette, ce qui identifie le lien, peu importe sa couleur, sa matière, notamment par rapport à l'utilisation d'un moyen de localisation sous la forme d'une caméra selon l'état de la technique.
De plus, grâce à la présence de la surface de rampe de la languette d'écartement, cela permet d'insérer la languette d'écartement entre le lien et la surface de référence du lot d'éléments et d'écarter le lien de cette surface de référence et ainsi de tendre le lien. Lorsque le lien est tendu, cela facilite sa découpe par la lame de découpe. En outre, le lien lorsqu'il est tendu a pour avantage d'améliorer le serrage du lien autour d'un lot d'éléments, pouvant ainsi permettre à une machine d'extraction de saisir le lot d'éléments en entier (sans le diviser par sous-lots) pour l'extraction du lot d'éléments d'une palette sans avoir la nécessité d'un deuxième lien ni d'un moyen de préhension en étau et d'un moyen de séparation.
Un tel chariot coupe lien permet donc de diminuer significativement le coût pour extraire un lot d'éléments entouré par un lien d'une palette. Il est en outre d'une grande fiabilité et permet la captation de tous types de liens, ce qui le rend très versatile.

Avantageusement, le châssis de découpe est mobile en rotation selon un premier axe de rotation par rapport au châssis de déplacement.

Selon un exemple, le châssis de déplacement comprend des moyens de déplacement en translation selon un axe de translation perpendiculaire au premier axe de rotation.

Avantageusement, le chariot coupe lien comprend un moyen de plaquage monté entre le châssis de déplacement et le châssis de de découpe et configuré pour faire pivoter le châssis de découpe entre une première position et une dernière position, le moyen de plaquage exerçant une force sur le châssis de découpe vers la dernière position pour que l'extrémité avant de la languette d'écartement soit en contact avec la surface de référence du lot d'éléments pendant le déplacement du chariot coupe lien. Une telle caractéristique permet de contrôler le déplacement du châssis de découpe par rapport au châssis de déplacement et ainsi de contrôler la position de la languette d'écartement par rapport à la surface de référence du lot d'éléments.

Selon une première variante du moyen de plaquage, le moyen de plaquage est un actionneur de compensation, de préférence un vérin. Le vérin peut être sous la forme d'un vérin pneumatique, hydraulique ou électrique.

Selon un exemple, le moyen de plaquage est un actionneur linéaire, par exemple un vérin configurer pour faire pivoter le châssis de découpe par rapport au châssis de déplacement selon un premier axe de rotation, de façon régulée. Par "de façon régulée" on entend que le moyen de plaquage applique une force régulée selon la force de la languette d'écartement et le guide sur la surface de référence du lot d'éléments. Autrement dit, la force exercée sur la languette d'écartement est déterminée selon l'orientation du châssis de découpe et de la surface de référence, et selon la distance du châssis de déplacement par rapport à la surface de référence.

Selon une deuxième variante du moyen de plaquage, le moyen de plaquage est un ressort.

Préférentiellement, le chariot coupe lien comprend un actionneur de blocage monté mobile sur le châssis de découpe et actionnable après détection du lien par le détecteur de présence, l'actionneur de blocage comprenant un bloc configuré pour pincer le lien contre la languette d'écartement. Une telle caractéristique permet de maintenir le lien en position d'une part pendant le déplacement du chariot coupe lien et d'autre part pour faciliter la découpe du lien par la lame de découpe et notamment en maintenant le lien pour le retirer facilement du lot d'éléments une fois le lien coupé.

Selon une première variante de la languette d'écartement, la languette d'écartement comprend une face concave en vis-à-vis du châssis de découpe du chariot coupe lien. Une telle caractéristique permet de faciliter le glissement de l'extrémité avant de la languette sous le lien entourant le lot d'éléments.

Selon une deuxième variante de la languette d'écartement, la languette d'écartement comprend une face convexe en vis-à-vis du châssis de découpe du chariot coupe lien. Une telle caractéristique permet, lorsque la languette d'écartement est en contact avec la surface de référence, d'éviter d'endommager la surface de référence pendant le déplacement du chariot coupe lien.

Préférentiellement, le guide comprend un bord avant agencé à l'avant de l'extrémité avant de la languette d'écartement. Une telle caractéristique permet d'optimiser le guidage de la languette pendant le déplacement du chariot coupe lien.

Avantageusement, la languette d'écartement est déformable élastiquement. Une telle caractéristique permet de faciliter le glissement de la languette d'écartement sous le lien entourant le lot d'éléments. En particulier, la languette d'écartement peut se plier élastiquement telle une lame ressort, pour permettre à une partie de la languette d'écartement s'étendant à partir de son extrémité avant, de glisser sur la surface de référence du lot d'éléments et de s'insérer sous le lien (entre le lien et la surface de référence) en exerçant une pression sur l'extrémité opposée de la languette, vers la surface de référence du lot de référence.

Avantageusement, la languette d'écartement est réalisée en acier ressort et de préférence en acier ressort XC100, c'est-à-dire présente une teneur en carbone de 1%.

Avantageusement, le détecteur de présence est monté sur le châssis de découpe.

Avantageusement, le châssis de découpe est mobile seulement en rotation par rapport au châssis de déplacement selon un premier axe de rotation ; le châssis de découpe comprend un bras de délimitation de pivotement du châssis de découpe monté mobile en rotation :
- par rapport au châssis de déplacement au moyen d'un arbre centré sur le premier axe de rotation, et
- par rapport au châssis de découpe au moyen d'un deuxième axe de rotation ; Le bras de délimitation comprenant au moins une butée pour la dernière position du châssis de découpe.

Une telle caractéristique permet de contrôler le pivotement du châssis de découpe par rapport au châssis de déplacement. Ainsi, cela permet d'exercer une pression sur la languette pour permettre à son extrémité avant de glisser sous le lien.

Selon un exemple dans lequel le chariot coupe lien comprend en outre le moyen de plaquage sous la forme d'un vérin, le deuxième axe de rotation correspond à la liaison entre le vérin et le châssis de découpe, le vérin comprenant à son autre extrémité une liaison pivot selon un troisième axe avec le châssis de déplacement.

Préférentiellement, le bras de délimitation comprend une lumière délimitée par la butée de dernière position et une butée de première position du châssis de découpe, la lumière coopérant avec un plot de blocage monté fixe sur le châssis de découpe de sorte à limiter la rotation du châssis de découpe entre la première position et la dernière position. Une telle caractéristique permet de limiter le pivotement du châssis de découpe par rapport au châssis de déplacement entre une première et une dernière positions. En outre, cela permet de diminuer le jeu de montage du premier axe de rotation entre le châssis de déplacement et le châssis de découpe.

Préférentiellement, le détecteur de présence comprend :
- un balancier monté mobile en pivotement sur le châssis de découpe selon un troisième axe de rotation, entre une position de repos et une position finale et comportant un bras s'étendant perpendiculairement au troisième axe de rotation en ayant une extrémité inférieure opposée au troisième axe de rotation, qui en position de repos du balancier dépasse la languette d'écartement, et
- un capteur de changement de position du balancier émettant un signal de détection de présence lorsque le balancier est situé dans une position de poussée entre la position de repos exclue et la position finale inclue.

Une telle caractéristique permet, grâce à la combinaison d'un balancier et d'un capteur de changement de position du balancier, de simplifier la précision de la détection mécanique du lien.

Avantageusement, le guide comprend des bandes d'au moins un rouleau rotatif par rapport au châssis de découpe parallèles entre elles et formant la zone d'appui du guide. Une telle caractéristique permet de faciliter le déplacement du chariot coupe lien sur la surface de référence du lot d'éléments.

Préférentiellement, la lame de coupe comprend un bord de coupe agencé en vis-à-vis de la languette d'écartement et est montée mobile en translation sur le châssis de découpe entre une position de repos et une position de découpe selon lesquelles :
- dans la position de repos, la lame de découpe est éloignée de la languette d'écartement, et
- dans la position de découpe, la lame de découpe est en contact avec la languette d'écartement ou traverse la languette.

Avantageusement, la languette d'écartement comprend une ouverture, et dans la position de découpe la lame de découpe traverse l'ouverture de la languette d'écartement. En d'autres termes, dans des modes de réalisation, la languette d'écartement comprend une ouverture, configurée pour qu'une lame de coupe puisse la traverser. Cela permet de ne pas entraver le passage de la lame de coupe lors de la coupe du lien. En particulier, l'ouverture de la languette est longitudinale. Dans l'exemple selon lequel le chariot coupe lien comprend un moyen de plaquage, le moyen de plaquage comprend en outre une fente ou une ouverture traversée par la lame de coupe en position de découpe de la lame.

De manière préférée, la languette est réalisée d'un seul tenant. La languette peut par exemple être fabriquée par impression 3D.

Selon une variante, la lame de coupe est montée mobile en translation sur le châssis de découpe entre une position de repos et une position de découpe et comprend un bord de coupe, la lame de coupe se déplaçant dans un plan contigu à un bord latéral de la languette selon lesquelles :
- dans la position de repos, le bord de coupe est plus proche du châssis de déplacement que le bord latéral de la lame de découpe, et
- dans la position de découpe, le bord de coupe est plus éloigné du châssis de déplacement que le bord latéral de la lame de découpe.

Un deuxième aspect de l'invention concerne une languette d'écartement pour un chariot coupe lien selon le premier aspect de l'invention, la languette d'écartement étant configurée pour être montée solidaire sur un châssis de découpe et comprenant une surface de rampe s'étendant d'une extrémité avant à une extrémité arrière de la languette d'écartement, l'extrémité avant étant configurée pour glisser entre un lien et une surface de référence d'un lot d'éléments de sorte que la surface de rampe écarte le lien de la surface de référence du lot d'éléments lors du déplacement du châssis de déplacement.

Avantageusement, la languette d'écartement comprend une face concave en vis-à-vis du châssis de découpe.

Préférentiellement, la languette d'écartement est réalisée en acier ressort et présente de préférence une teneur en carbone de 1%.

Un troisième aspect de l'invention concerne un procédé de découpe d'un lien entourant un lot d'éléments pour les maintenir ensemble, par un chariot coupe lien selon le premier aspect de l'invention comprenant les étapes suivantes :
- positionnement du chariot coupe lien en vis-à-vis d'une zone d'une surface de référence du lot d'éléments en amont du lien,
- déplacement du chariot coupe lien vers l'avant, selon un axe de translation, en glissant le guide sur la surface de référence entraînant :
   ∘ le pivotement du châssis de découpe par rapport au châssis de déplacement de sorte que l'extrémité avant de de la languette d'écartement est en contact avec la surface de référence du lot d'éléments en fonction du contact du guide avec la languette d'écartement,
   ∘ le glissement de l'extrémité avant de la languette d'écartement entre le lien et la surface de référence du lot d'éléments, et
   ∘ le glissement de la surface de rampe de la languette d'écartement sous le lien et sur la surface de référence du lot d'éléments jusqu'à la détection du lien par le détecteur de présence,
- découpe du lien par la lame de coupe.

Avantageusement, le chariot coupe lien comprend un moyen de plaquage monté entre le châssis de déplacement et le châssis de de découpe et le pivotement du châssis de découpe par rapport au châssis de déplacement est réalisé sous l'action du moyen de plaquage présentant une pression régulée en fonction de la force exercée par le guide sur la surface de référence du lot d'éléments de sorte que l'extrémité avant de la languette d'écartement soit en contact avec la surface de référence du lot d'éléments.

Préférentiellement, le chariot coupe lien comprend un actionneur de blocage monté mobile sur le châssis de découpe, le procédé de découpe comprend :
- après la détection du lien par le détecteur de présence et avant l'étape de découpe, une étape de blocage du lien par le déplacement d'un bloc de l'actionneur de blocage d'une position repos, selon laquelle le bloc est écarté du lien, jusqu'à une position de pincement du lien contre la languette d'écartement, en appliquant une force sur le lien contre la surface de rampe de la languette d'écartement, et
- après l'étape de découpe, une étape de déplacement du chariot coupe lien entraînant le retrait du lien du lot d'éléments, le lien étant pincé entre le bloc de l'actionneur de blocage et la languette d'écartement,
- après l'étape de déplacement du chariot coupe lien, une étape de mise au rebu du lien dans un récipient, en déplaçant le chariot coupe lien au-dessus du récipient et en déplaçant le bloc de l'actionneur de blocage de sa position de pincement à sa position de repos.

Avantageusement, le procédé de découpe comprend, avant l'étape de déplacement du chariot coupe lien en vis-à-vis d'une zone, une étape de reconnaissance d'un marqueur de positionnement de la surface de référence du lot d'éléments, la zone étant déterminée selon l'emplacement du marqueur de positionnement.

Avantageusement, l'étape de reconnaissance du marqueur de positionnement est réalisée par un lecteur de marquage tel qu'un lecteur de code barre ou de QR code imprimé sur la surface de référence du lot d'éléments.

Avantageusement, le procédé de découpe comprend une étape de transmission d'une information de non-détection lorsque le chariot coupe lien est déplacé en translation au-delà d'une position prédéterminée et/ou lorsque le détecteur de présence n'a pas détecté de lien.

Un quatrième aspect de l'invention concerne une machine comprenant :
- un robot comportant une tête de préhension mobile et configurée pour saisir un lot d'éléments,
- un chariot coupe lien selon le premier aspect de l'invention, le chariot coupe lien étant monté mobile en translation par rapport à la tête de préhension,
- un actionneur monté sur la tête de préhension pour déplacer en translation le chariot coupe lien sur la tête de préhension.

La machine selon l'invention permet de déplacer un lot d'éléments entourés par un lien grâce à la présence de la tête de préhension, et permet de couper lien grâce à l'intégration d'un chariot coupe lien selon le premier aspect de l'invention. La combinaison d'une tête de préhension et d'un chariot dans la même machine permet d'obtenir une machine polyvalente présentant un encombrement minimisé.

Avantageusement, le robot comprend une base et un bras articulé monté mobile sur la base, la tête de préhension étant montée mobile sur le bras articulé].

Préférentiellement, la tête de préhension comprend un corps principal et des pieds de préhension montés fixes sur une deuxième surface du corps principal pour saisir la surface de référence du lot d'éléments.

Avantageusement, chaque pied de préhension du corps principal de la tête de préhension de la machine comprend une ventouse agencée à son extrémité.

Avantageusement, la tête de préhension du robot comprend au moins un rail de guidage agencé dans le corps principal, et le châssis de découpe du chariot coupe lien comprend des roues de guidage reçues dans le rail de la tête de préhension de sorte que le châssis de découpe translate au moyen de l'actionneur par rapport à la tête de préhension. En d'autres termes, dans ce mode de réalisation, au moyen de l'actionneur, le châssis de découpe se déplace en translation par rapport à la tête de préhension.

Un cinquième aspect de l'invention concerne un ensemble comprenant une tête de préhension comprenant :
- un corps principal,
- le chariot coupe lien selon le premier aspect de l'invention avec ou sans les différentes caractéristiques optionnelles ou préférentielles, le chariot coupe lien étant monté mobile en translation sur le corps principal de l'ensemble, et
- un actionneur pour déplacer le chariot coupe lien par rapport au corps principal de la tête de préhension.

L'invention et ses différentes applications seront mieux comprises à la lecture de la description qui suit et à l'examen des figures qui l'accompagnent.

### BREVE DESCRIPTION DES FIGURES

D'autres avantages et caractéristiques de l'invention apparaîtront à la lecture de la description qui suit, illustrée par les figures dans lesquelles :
- La figure 1 est une vue schématique d'une machine comprenant un robot et un chariot coupe lien selon l'invention, dans une première position d'une tête de préhension du robot par rapport à une base du robot, lors d'une étape de positionnement d'un chariot coupe lien par rapport à un lot d'éléments d'un procédé selon laquelle la tête de préhension du robot est dans une position éloignée par rapport au lot d'éléments, et un châssis de découpe du chariot coupe lien est dans une première position par rapport à un châssis de déplacement du chariot coupe lien ;
- La figure 2 est une vue schématique de la machine, lors de l'étape de positionnement du chariot coupe lien selon la figure1 selon laquelle la tête de préhension a été déplacée dans une position de contact par rapport au lot d'éléments et le châssis de découpe a été déplacé dans une position intermédiaire par rapport au châssis de déplacement du chariot coupe lien ;
- La figure 3 est une vue schématique de la machine, lors d'une étape de déplacement du chariot coupe lien par rapport à la tête de préhension du robot selon laquelle le chariot coupe lien a été déplacé par rapport à la tête de préhension et est représenté dans une position d'insertion par rapport au lien du lot d'élément ;
- La figure 4 est une vue schématique de la machine, lors de l'étape de déplacement du chariot coupe lien selon la figure 4 selon laquelle le chariot coupe lien a été déplacé dans une position d'arrêt par rapport au lien du lot d'élément ;
- La figure 5 est une vue schématique de la machine, lors d'une étape de blocage du lien selon laquelle un actionneur de blocage est représenté dans une position de pincement par rapport au chariot coupe lien, l'actionneur de blocage étant représenté dans une position repos aux figures 1 à 4 ;
- La figure 6 est une vue schématique de la machine, dans une deuxième position de la tête de préhension par rapport à la base du robot, après une étape de transport du lot d'éléments, le chariot coupe lien étant dans la même position qu'à la figure 5 ;
- La figure 7 est une vue schématique de la machine, lors d'une étape de découpe du lien selon laquelle une lame de coupe du chariot coupe lien est dans une position de découpe, la lame de coupe étant représentée dans une position de repos aux figures 1 à 6 ;
- La figure 8 est une vue schématique selon la figure 7, lors d'une étape de retrait du lien selon laquelle la lame de coupe est revenue dans sa position de repos, l'actionneur de blocage est resté dans sa position de pincement, le lien est coupé et le lot d'éléments est éloigné par rapport à la tête de préhension du robot ;
- La figure 9 est une vue de côté du chariot coupe lien selon un exemple d'un mode de réalisation de l'invention ;
- La figure 10 est une vue de côté du chariot coupe lien selon un deuxième exemple d'un mode de réalisation de l'invention.

### DESCRIPTION DETAILLEE

Un exemple de réalisation d'un chariot coupe lien selon l'invention et un exemple de réalisation d'une machine comprenant un robot et un exemple du chariot coupe lien sont décrits en détail ci-après, en référence aux dessins annexés. Ces exemples illustrent les caractéristiques et avantages de l'invention.

Sauf précision contraire, un même élément apparaissant sur des figures différentes présente une référence unique.

L'invention concerne un chariot coupe lien 200 configuré pour couper un lien 32 entourant un lot d'éléments 30. Selon un autre aspect, l'invention concerne aussi un ensemble comprenant une tête de préhension 120 comprenant :
- un corps principal 122 sur lequel le chariot coupe lien 200 est monté mobile, et
- un actionneur pour déplacer le chariot coupe lien 200 par rapport au corps principal 122.

L'invention concerne aussi une machine 10 comprenant l'ensemble et un robot 100 comprenant la tête de préhension 120 montée sur un bras articulé 130 du robot 100 pour déplacer la tête de préhension 120.

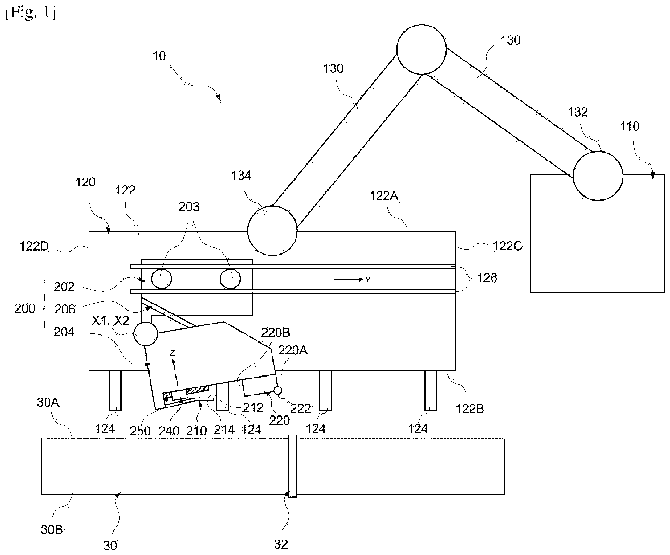

Telle qu'illustrée aux figures 1 à 8, la machine 10 comprend donc :
- le robot 100 comportant :
   ∘ une base 110,
   ∘ la tête de préhension 120 montée mobile par rapport à la base 110, et
   ∘ un bras articulé 130 reliant la tête de préhension 120 à la base 110 et s'étendant entre une première liaison pivot 132 avec la base 110 et une deuxième liaison pivot 134 avec la tête de préhension 120 ;
- le chariot coupe lien 200 monté mobile par rapport à la tête de préhension 120 du robot 100 et comprenant :
   ∘ un châssis de déplacement 202,
   ∘ un châssis de découpe 204 monté mobile par rapport au châssis de déplacement 202 ; et
- l'actionneur (non représenté) monté sur la tête de préhension 120 pour déplacer en translation le chariot coupe lien 200 sur la tête de préhension 120.

Plus particulièrement, le corps principal 122 de la tête de préhension 120 comprend :
- une première face 122A et une deuxième face 122B opposée à la première face, et
- une face avant 122C et une face arrière 122D opposée à la face avant 122C, les faces avant et arrière 122C, 122D reliant la première et la deuxième faces 122A, 122B entre elles.

Dans des modes de réalisation, la deuxième liaison pivot 134 du bras articulé 130 est agencé au niveau de la première face 122A du corps principal 122 de la tête de préhension 120. La tête de préhension 120 comprend des pieds de préhension 124 montés fixes sur la deuxième face 122B du corps principal 122. Les pieds de préhension sont configurés pour saisir la surface de référence 30A du lot d'éléments 30.

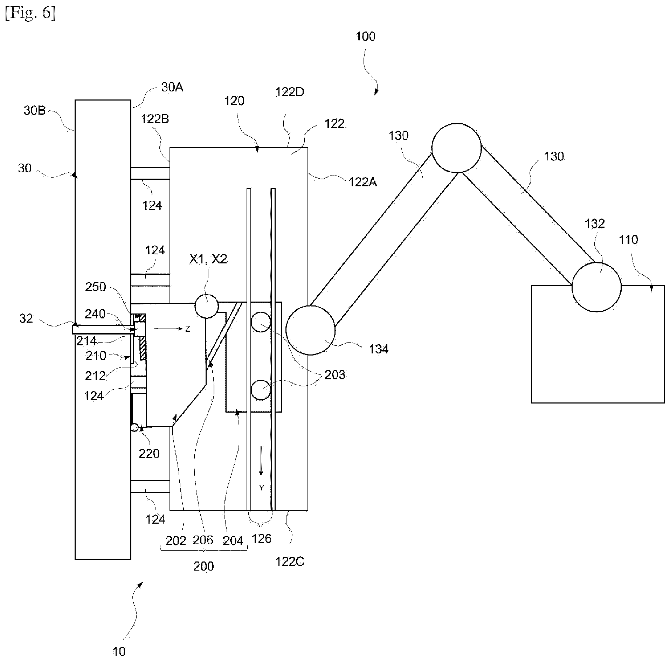

La tête de préhension 120 du robot 100 est mobile en pivotement par rapport à la base 110 entre plusieurs positions dont :
- une première position, représentée aux figures 1 à 5, selon laquelle la tête de préhension 120 s'étend sensiblement horizontalement de sorte que les première et deuxième faces 122A, 122B s'étendant sensiblement horizontalement, et
- une deuxième position, représentée aux figures 6 à 8, selon laquelle la tête de préhension 120 s'étend sensiblement verticalement de sorte que les faces avant et arrières 122C, 122D s'étendent sensiblement verticalement et la face arrière 122D étant agencée au-dessus de la face avant 122D.

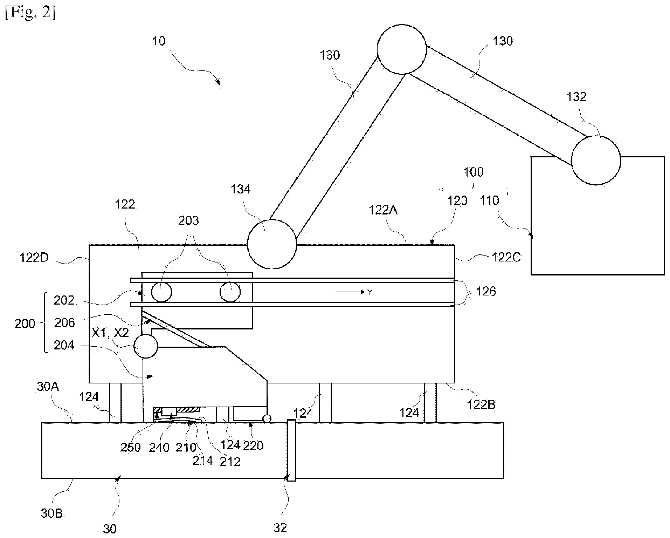

La tête de préhension 120 du robot 100 est aussi mobile en pivotement par rapport à la surface de référence 30A du lot d'éléments 30 entre :
- une position éloignée, représentée à la figure 1, selon laquelle la deuxième face 122B du corps principal 122 est éloignée de la surface de référence 30A du lot d'éléments 30 d'une distance non nulle, et
- une position de contact, représentée aux figures 2 à 7, selon laquelle la deuxième face 122B du corps principal 122 est sensiblement parallèle à la surface de référence 30A et les pieds de préhensions 124 de la tête de préhension 120 sont en contact avec la surface de référence 30A du lot d'éléments 30.

La tête de préhension 120 comprend optionnellement un rail 126 de guidage, ici en l'occurrence un guidage à double rails, monté sur et agencé dans le corps principal 122. Le chariot coupe lien 200 comprend optionnellement des roues de guidage 203 montées dans le rail 126 pour la translation du châssis de déplacement 200 par rapport à la tête de préhension 120 au moyen de l'actionneur en translation. Les roues de guidages 203 sont, dans cet exemple, montées chacune sur un arbre correspondant du châssis de déplacement 202.

Le chariot coupe lien 200 est donc monté mobile en translation par rapport à la tête de préhension 120 du robot 100, dans le rail 126 de la tête de préhension 120 entre :
- une position initiale, représentée aux figures 1 et 2, selon laquelle le chariot de coupe 200 est agencé au plus proche de la face arrière 122D du corps principal 122 de la tête de préhension 120, et
- une position finale, non représentée, selon laquelle le chariot de coupe est agencé au plus proche de la face avant 122C du corps principal 122 de la tête de préhension 120.

L'actionneur, non représenté, peut être un moteur électrique déplaçant le chariot de découpe 200, par exemple à l'aide d'une chaîne et une roue dentée montée sur le chariot de découpe 200 ou encore peut être un vérin, par exemple pneumatique.

Le châssis de découpe 204 monté mobile par rapport au châssis de déplacement 202 est en l'occurrence solidaire en translation par rapport au châssis de déplacement 202 et est donc aussi déplacé en translation par rapport à la tête de préhension 120 par ce même actionneur. Le châssis de découpe 204 est, dans cet exemple, mobile uniquement en rotation par rapport au châssis de déplacement 202 selon un axe de rotation X2.

Selon une variante, le châssis de découpe 204 est déplaçable selon un mouvement de rotation et selon un mouvement de translation par rapport au châssis de déplacement 202. Le châssis de découpe 204 est donc mobile entre :
- une première position, représentée à la figure 1, selon laquelle, le châssis de découpe 204 est incliné vers l'arrière de la tête de préhension 120,
- une dernière position, non représentée, selon laquelle le châssis de découpe 204 est incliné vers l'avant de la tête de préhension 120.

Le châssis de découpe est représenté aux figures 2 à 8, dans une position intermédiaire selon laquelle le châssis de découpe 204 est agencé parallèlement au châssis de déplacement 202 de sorte que le guide 220 est en contact avec la surface de référence 30A du lot d'éléments 30.

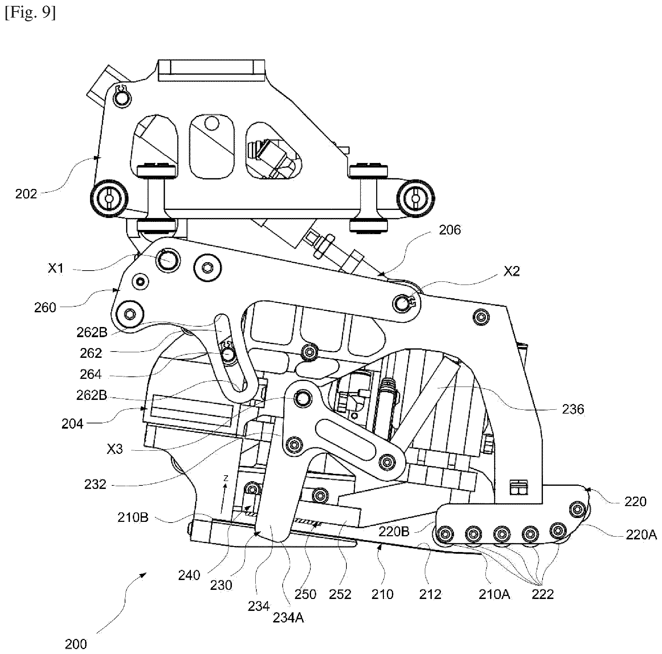

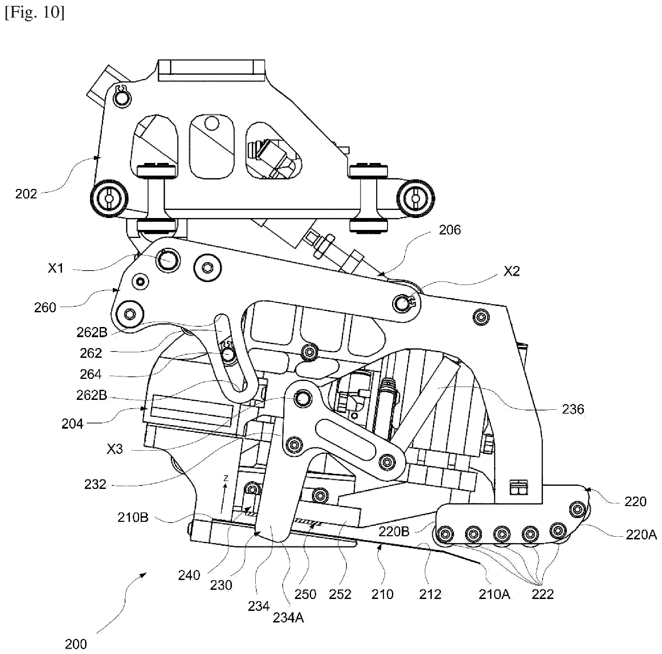

La Figure 9 illustre un premier exemple de ce mode de réalisation du chariot coupe lien 200 et la figure 10 illustre un deuxième exemple de ce mode de réalisation du chariot coupe lien 200.

Tel qu'illustré à la figure 10, dans un mode de réalisation possible, le chariot coupe lien 200 comprend :
- une languette d'écartement 210 montée optionnellement solidaire sur le châssis de découpe 204,
- un guide 220 monté solidaire à l'avant sur le châssis de découpe 204,
- un détecteur de présence 230 du lien 32, et
- une lame de coupe 240 du lien 32 montée mobile en translation sur le châssis de découpe 204,
- un moyen de plaquage 206 monté entre le châssis de déplacement 202 et le châssis de découpe 204 pour déplacer le châssis de découpe 204 par rapport au châssis de déplacement 202 entre la première et la dernière position,
- un actionneur de blocage 250 monté mobile sur le châssis de découpe 204 et actionnable après détection du lien 32 par le détecteur de présence 230, et
- un bras de délimitation 260 de pivotement du châssis de découpe 204 monté mobile en rotation :
   ∘ par rapport au châssis de déplacement 202 au moyen d'un arbre centré sur le premier axe de rotation X1, et
   ∘ par rapport au châssis de découpe 204 au moyen d'un deuxième axe de rotation X2.

Par « montée solidaire » on entend fixée ou faisant partie de la même pièce. Par exemple, la languette d'écartement 210 peut être soit fixée au châssis de découpe 204 par des moyens de fixation tels que des écrous, ou bien faire partie de la même pièce que celle du châssis de découpe 204 par soudure.
Dans des modes de réalisation, il est possible de remplacer la languette d'écartement 210, notamment lorsqu'elle présente des signes d'usure.

Selon un autre exemple non représenté, la languette d'écartement 210 est articulée sur le châssis de découpe 204, par exemple selon un axe de rotation. Un autre actionneur peut aussi être monté pour déplacer la languette d'écartement 210 selon un angle prédéterminé ou régulé par rapport au châssis de découpe 204.

### Languette d'écartement 210 :

Plus particulièrement, la languette d'écartement 210 comprend une surface de rampe 212 s'étendant entre une extrémité avant 210A et une extrémité arrière 210B. L'extrémité avant 210A de la languette d'écartement 210 est configurée pour glisser entre le lien 32 entourant le lot d'éléments 30 et une surface de référence 30A du lot d'éléments 30 de sorte que la surface de rampe 212 écarte le lien 32 de la surface de référence 30A du lot d'éléments 30 lors du déplacement du châssis de déplacement 202.

Selon un premier exemple de réalisation du chariot de découpe 200, tel que représenté aux figures 1 à 9, la surface de rampe 212 de la languette d'écartement 210 présente une face concave en vis-à-vis du châssis de découpe 204 du chariot coupe lien 200.

Selon un deuxième exemple de réalisation du chariot de découpe 200 tel que représenté à la figure 10, le chariot de découpe 200 est identique à celui premier exemple sauf en ce que la surface de rampe 212 de la languette d'écartement 210 présente une face convexe en vis-à-vis du châssis de découpe 204 du chariot coupe lien 200.

La languette d'écartement 210 peut se présenter selon le premier ou le deuxième exemple en fonction de la forme du lien 32 du lot d'éléments 30 à capter. D'autres modes de réalisation, non représentés, sont possibles.

Préférentiellement, la languette d'écartement 210 est élastique. Plus particulièrement, la languette d'écartement 210 est réalisée en acier ressort. Préférentiellement, la languette d'écartement 210 est réalisée en acier ressort XC100 et présente une teneur en carbone de 1%.

### Guide 220 :

Le guide 220 est configuré pour guider et adapter l'orientation de l'extrémité avant 210A de la languette d'écartement 210 par rapport à la surface de référence 30A afin de faciliter l'insertion de la languette d'écartement 210 entre le lien 32 et la surface de référence 30A du lot d'éléments 30.

Le guide 220 comprend un bord avant 220A agencé à l'avant de l'extrémité avant 210A de la languette d'écartement 210.

Le guide 220 comprend des bandes d'au moins un rouleau rotatif par rapport au châssis de découpe 204 parallèles entre elles et formant la zone d'appui 222 du guide 220. En l'occurrence, le guide 220 comprend six bandes et chaque bande comprend plusieurs rouleaux rotatifs.

### Détecteur de présence 230 :

Le détecteur de présence 230 d'un lien 32 est configuré pour détecter le lien 32 lorsqu'il est en contact avec la surface de rampe 212 de la languette d'écartement 210.

Le détecteur de présence 230 est monté sur le châssis de découpe 204 du chariot coupe lien 200 et comprend :
- un balancier 232 monté mobile sur le châssis de découpe 204 selon un troisième axe de rotation X3 et comportant un bras 234 s'étendant perpendiculairement au troisième axe de rotation X3 qui comprend une extrémité inférieure 234A opposée au troisième axe de rotation X3, et
- un capteur de changement de position du balancier 232 émettant un signal de détection de présence lorsque le balancier 232 est situé entre la position de repos exclue et la position de poussée inclue.

Le capteur de changement de position, non représenté, peut être sous la forme d'un capteur mécanique, d'un capteur de déplacement ou d'un capteur de présence.

Le balancier 232 du détecteur de présence 230 est mobile en pivotement par rapport au châssis de découpe, entre :
- une position de repos, représentée à la figure 9, selon laquelle l'extrémité inférieure 234A du bras 234 du balancier 232 dépasse la languette d'écartement 210 selon une direction perpendiculaire aux premier et deuxième axes de rotation X1, X2, l'extrémité 234A étant agencée au-delà de la languette d'écartement 210,
- une position finale, non représentée, selon laquelle l'extrémité inférieure 234A du bras 234 du balancier 232 située au-dessus d'un plan défini par la surface de rampe 212 de la languette d'écartement 210.

Lors de la translation du chariot coupe lien 200 vers la position finale du balancier 232 du détecteur de présence 230, l'extrémité inférieure 234A du bras 234 du balancier 232 vient en contact avec le lien 32 situé sur la languette d'écartement 210, provoquant le pivotement du balancier 232 vers sa position finale et jusqu'à une position de poussée prédéterminée permettant au capteur de changement de position d'émettre un signal de détection de présence du lien 32 et ainsi de stopper la translation du chariot coupe lien 200. Dans la position de poussée, l'extrémité inférieure 234A du bras est plus proche du troisième axe de rotation X3 qu'en position de repos.

### Lame de coupe 240 :

La lame de coupe 240 est configurée pour couper le lien 32 préalablement détecté par le détecteur de présence 230.

La lame de coupe 240 est mobile en translation par rapport au châssis de découpe 204 entre différentes positions dont :
- une position de repos selon laquelle la lame de découpe 240 est éloignée du lien 32 et de la languette d'écartement 210, et
- une position de découpe selon laquelle la lame de découpe 240 est soit :
   ∘ plus proche de la zone de la surface de référence 30A du lot
   d'éléments 30 recouverte par le lien 32, en position détectée, ou ∘ en contact avec la languette d'écartement 210.

Dans les exemples représentés, la lame de coupe 240 comprend un bord de coupe, la lame de coupe 240 se déplaçant dans un plan contigu à un bord latéral de la languette d'écartement 210 selon lesquelles :
- dans la position de repos, le bord de coupe est plus proche du châssis de déplacement 202 que le bord latéral de la lame de découpe 240, et
- dans la position de découpe, le bord de coupe est plus éloigné du châssis de déplacement 202 que le bord latéral de la lame de découpe 240 au niveau du lien en position détectée.

Selon un autre exemple, la lame de découpe 240 est mobile en translation suivant un plan traversant la languette d'écartement 210. Dans cet exemple, le bord de découpe de la lame de découpe 240 vient en contact avec la lame de découpe 240, ou la lame de découpe 240 traverse un orifice de la languette d'écartement 210.

Dans des modes de réalisation, la lame de coupe est agencée dans un bloc de coupe, monté sur le châssis de découpe 204. Le bloc de coupe est alors monté de manière amovible, afin de pouvoir remplacer la lame de coupe 240 de manière simplifiée et en toute sécurité par un opérateur. Par exemple, le bloc de coupe est monté sur le châssis de découpe 204 par des moyens de fixation tels que des écrous.

### Moyen de plaquage 206 :

Le moyen de plaquage 206 est monté entre le châssis de déplacement 202 et le châssis de découpe 204 et est configuré pour faire pivoter le châssis de découpe 204 par rapport au châssis de déplacement entre sa première position et sa dernière position.

Le moyen de plaquage 206 exerce une force sur le châssis de découpe 204 vers la dernière position pour que l'extrémité avant 210A de la languette d'écartement 210 soit en contact avec la surface de référence 30A du lot d'éléments 30 pendant le déplacement du chariot coupe lien 200.

Selon une première variante possible du moyen de plaquage 206 tel que représenté à la figure 9, le moyen de plaquage 206 est un actionneur de compensation, de préférence un vérin. Le vérin peut être sous la forme d'un vérin pneumatique, hydraulique ou électrique.

Selon une deuxième variante possible du moyen de plaquage 206 non représentée, le moyen de plaquage 206 est un ressort.

### Actionneur de blocage 250 :

Selon un exemple de réalisation de l'actionneur de blocage 250 tel que représenté à la figure 9, l'actionneur de blocage 250 comprend un bloc 252 configuré pour pincer le lien 32 contre la languette d'écartement 210.

### Bras de délimitation 260 :

Le bras de délimitation 260 comprenant au moins une butée 262B pour la dernière position du châssis de découpe 204.

Le bras de délimitation 260 comprend une lumière 262 délimitée par la butée 262B de dernière position et une butée 262A de première position du châssis de découpe 204, la lumière 262 coopérant avec un plot de blocage 264 monté fixe sur le châssis de découpe 204 de sorte à limiter la rotation du châssis de découpe 204 entre la première position et la dernière position.

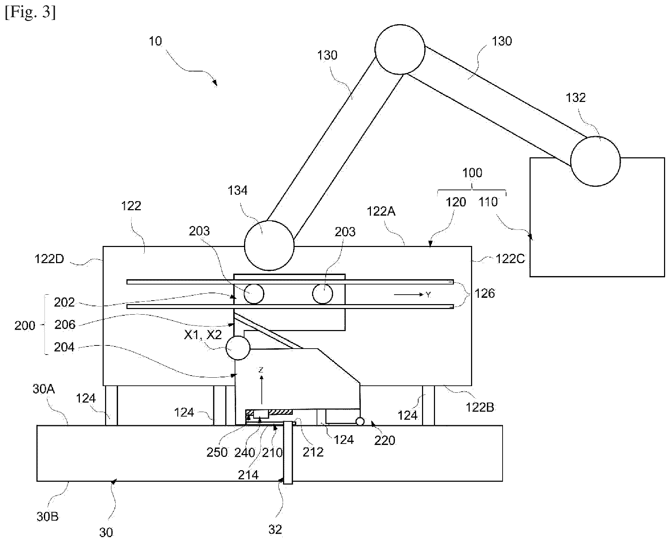

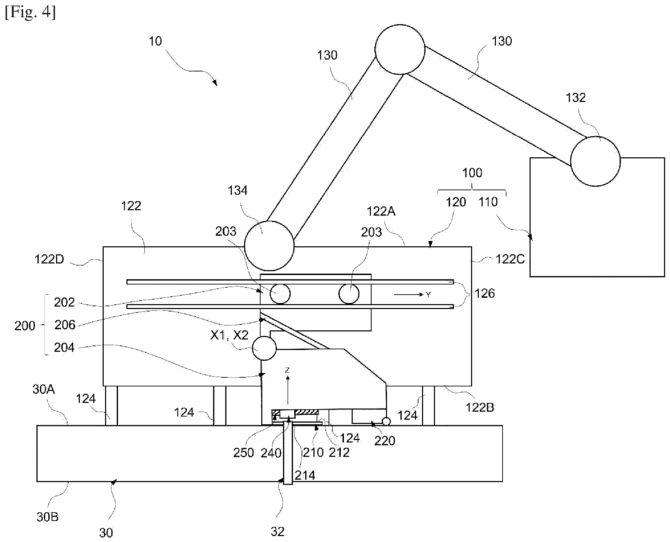

Le chariot coupe lien 200 se déplace donc en translation par rapport au lien 32 entourant le lot d'éléments 30 avec le châssis de découpe 204 situé dans une position intermédiaire par rapport au châssis de déplacement 202, glissant sur la surface de référence 30A du lot d'éléments 30 entre :
- une position initiale, puis
- une position d'insertion, représentée à la figure 3, selon laquelle l'extrémité avant 210A de la languette d'écartement 210 est glissée sous le lien 32, et une portion de la surface de rampe 212 de la languette d'écartement 210 est agencée entre le lien 32 et la surface de référence 30A du lot d'éléments 30, puis
- une position d'arrêt, représentée à la figure 4, selon laquelle la lame de coupe 240 et le bloc 252 de l'actionneur de blocage 250 sont agencés en vis-à-vis du lien 32.

Les figures 1 à 8 représentent différentes étapes d'un exemple de mise en oeuvre d'un procédé de retrait d'un lien 32 entourant un lot d'éléments 30 mis en oeuvre par la machine 10. Le procédé de retrait de la machine comprend des étapes d'un procédé de découpe du lien 32 entourant le lot d'éléments 30 mis en oeuvre par le chariot coupe lien 200.

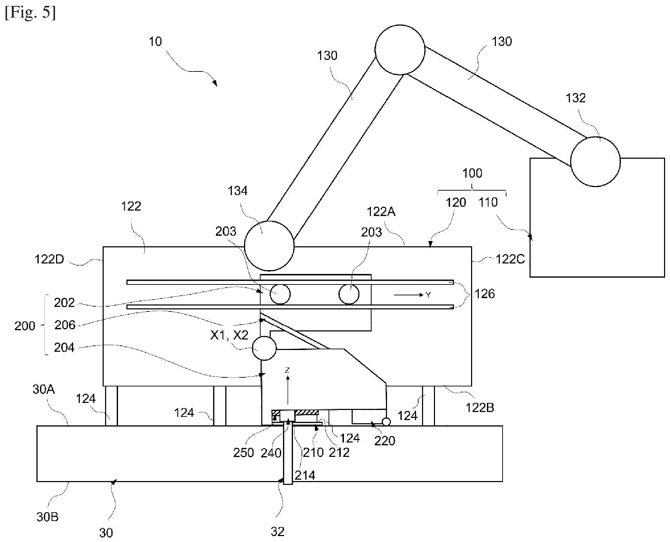

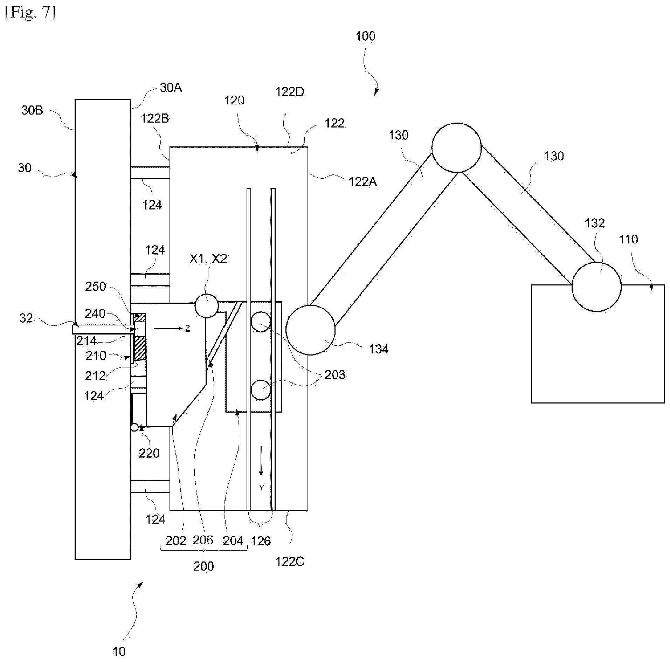

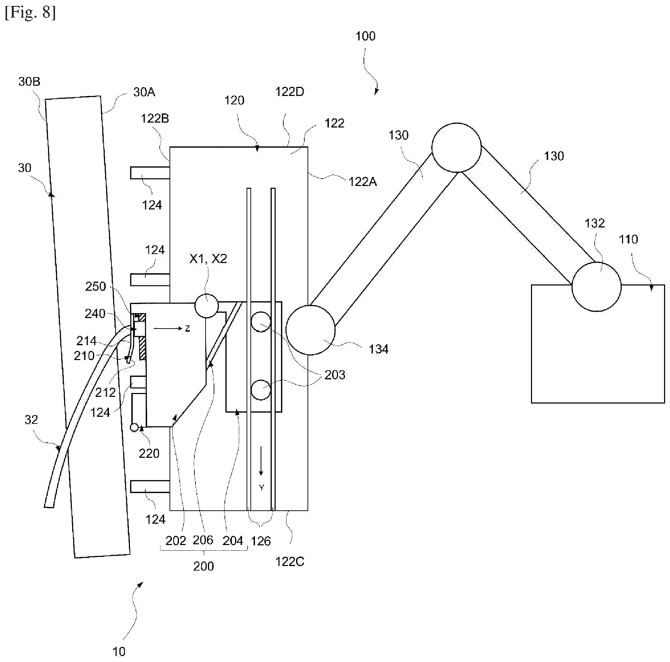

Le procédé de retrait comprend par exemple les étapes successives suivantes :
- reconnaissance d'un marqueur de positionnement de la surface de référence 30A du lot d'éléments 30, la zone de reconnaissance étant déterminée selon l'emplacement du marqueur de positionnement, ainsi le marqueur permet au robot de positionner la tête de préhension en vis-à-vis de la surface de référence avec le chariot de découpe 200 en première position par rapport à la tête de préhension, située derrière le lien 32. En d'autres termes, ledit lien 32 se trouve dans une zone devant (en amont) le chariot de découpe 200, ledit chariot de découpe 200 étant en première position. Ainsi, la localisation précise du lien 32 est inconnue ;
- déplacement de la tête de préhension 120 jusqu'à sa première position par rapport à la base 110 du robot 100 (figure 1) ;
- déplacement de la tête de préhension 120 de sa position éloignée à sa position de contact (étape de la figure 1 à la figure 2) ;
- positionnement du chariot coupe lien 200 dans une première position en vis-à-vis d'une zone de la surface de référence 30A du lot d'éléments 30, en amont du lien 32 (étape de la figure 1 à la figure 2) ;
- déplacement du chariot coupe lien 200 vers l'avant, selon un axe de translation Y, en glissant le guide 220 sur la surface de référence 30A entraînant :
   ∘ le pivotement du châssis de découpe 204 par rapport au châssis de déplacement 202, de sorte que l'extrémité avant 210A de la languette d'écartement 210 est en contact avec la surface de référence 30A du lot d'éléments 30 en fonction du contact du guide 220 avec la languette d'écartement 210 (figure 2), et le guide 220 est en contact avec la surface de référence 30A,
   ∘ le glissement de l'extrémité avant 210A de la languette d'écartement 210 entre le lien 32 et la surface de référence 30A du lot d'éléments 30 (figure 3), et
   ∘ le glissement de la surface de rampe 212 de la languette d'écartement 210 sous le lien 32 et sur la surface de référence 30A du lot d'éléments 30 jusqu'à la détection du lien 32 par le détecteur de présence 230 (figure 4) ;
- blocage du lien 232 par le déplacement du bloc 252 de l'actionneur de blocage 250 de sa position repos jusqu'à sa position de pincement, en appliquant une force sur le lien 32 contre la surface de rampe 212 de la languette d'écartement 210 (figure 5) ;
- déplacement de la tête de préhension 120 vers sa dernière position, jusqu'à une position prédéterminée, par exemple selon une quantité d'éléments dans le magasin de stockage, par rapport à la base 110 du robot 100 (figure 6) ;
- découpe du lien 32 par la lame de coupe 240 (figure 7) ;
- déplacement du chariot coupe lien 200 entraînant le retrait du lien 32 du lot d'éléments 30, le lien 32 étant pincé entre le bloc 252 de l'actionneur de blocage 250 et la languette d'écartement 210, (figure 8) ;
- optionnellement, mise au rebu du lien 32 dans un récipient, en déplaçant le chariot coupe lien 200 au-dessus du récipient et en déplaçant le bloc 252 de l'actionneur de blocage 250 de sa position de pincement à sa position de repos (non représentée).

Le procédé de retrait peut comprendre en outre une étape de transmission d'une information de non-détection lorsque le chariot coupe lien 200 est déplacé en translation au-delà d'une position prédéterminée et/ou lorsque le détecteur de présence 230 n'a pas détecté de lien 32.

Plus particulièrement, l'étape de reconnaissance du marqueur de positionnement est par exemple réalisée par un lecteur de marquage tel qu'un lecteur de code barre ou de QR code imprimé sur la surface de référence 30A du lot d'éléments 30.

Plus particulièrement, lors de l'étape de déplacement du chariot coupe lien 200 vers l'avant, le pivotement du châssis de découpe 204 par rapport au châssis de déplacement 202 est réalisé sous l'action du moyen de plaquage 206 présentant une pression régulée en fonction de la force exercée par le guide 220 sur la surface de référence 30A du lot d'éléments 30 de sorte l'extrémité avant 210A de la languette d'écartement 210 soit en contact avec la surface de référence 30A du lot d'éléments 30.

## Revendications

1. Chariot coupe lien (200) pour couper un lien (32) entourant un lot d'éléments (30) comprenant :
- un châssis de déplacement (202),
- un châssis de découpe (204) mobile par rapport au châssis de déplacement (202),
- une languette d'écartement (210) montée solidaire sur le châssis de découpe (204) et comprenant une surface de rampe (212) s'étendant d'une extrémité avant (210A) à une extrémité arrière (210B) de la languette d'écartement (210), l'extrémité avant (210A) étant configurée pour glisser entre un lien (32) et une surface de référence (30A) du lot d'éléments (30) de sorte que la surface de rampe (212) écarte le lien (32) de la surface de référence (30A) du lot d'éléments (30) lors du déplacement du châssis de déplacement (202),
- un guide (220) monté solidaire à l'avant sur le châssis de découpe (204) pour guider et adapter l'orientation de l'extrémité avant (210A) de la languette d'écartement (210) par rapport à la surface de référence (30A) afin de faciliter l'insertion de la languette d'écartement (210) entre le lien (32) et la surface de référence (30A),
- un détecteur de présence (230) d'un lien (32) configuré pour détecter le lien (32) lorsqu'il est en contact avec la surface de rampe (212) de la languette d'écartement (210), et
- une lame de coupe (240) configurée pour couper le lien (32).

2. Chariot coupe lien (200) selon la revendication 1, **caractérisé en ce qu'**il comprend un moyen de plaquage (206) monté entre le châssis de déplacement (202) et le châssis de découpe (204) et configuré pour faire pivoter le châssis de découpe (204) entre une première position et une dernière position, le moyen de plaquage (206) exerçant une force sur le châssis de découpe (204) vers la dernière position pour que l'extrémité avant (21 0A) de la languette d'écartement (210) soit en contact avec la surface de référence (30A) du lot d'éléments (30) pendant le déplacement du chariot coupe lien (200).

3. Chariot coupe lien (200) selon l'une quelconque des revendications précédentes, **caractérisé en ce qu'**il comprend un actionneur de blocage (250) monté mobile sur le châssis de découpe (204) et actionnable après détection du lien (32) par le détecteur de présence (230), l'actionneur de blocage (250) comprenant un bloc (252) configuré pour pincer le lien (32) contre la languette d'écartement (210).

4. Chariot coupe lien (200) selon l'une quelconque des revendications précédentes, **caractérisé en ce que** la languette d'écartement (210) comprend une face concave en vis-à-vis du châssis de découpe (204).

5. Chariot coupe lien (200) selon l'une quelconque des revendications précédentes, **caractérisé en ce que** le guide (220) comprend un bord avant (220A) agencé à l'avant de l'extrémité avant (210A) de la languette d'écartement (210).

6. Chariot coupe lien (200) selon l'une quelconque des revendications précédentes, **caractérisé en ce que** la languette d'écartement (210) est déformable élastiquement.

7. Chariot coupe lien (200) selon l'une quelconque des revendications précédentes, **caractérisé en ce que** le châssis de découpe (204) est mobile seulement en rotation par rapport au châssis de déplacement (202) selon un premier axe de rotation (X1) et **en ce qu'**il comprend un bras de délimitation (260) de pivotement du châssis de découpe (204) monté mobile en rotation :
- par rapport au châssis de déplacement (202) au moyen d'un arbre centré sur le premier axe de rotation (X1), et
- par rapport au châssis de découpe (204) au moyen d'un deuxième axe de rotation (X2) ; ledit bras de délimitation (260) comprenant au moins une butée (262B) pour la dernière position du châssis de découpe (204).

8. Chariot coupe lien (200) selon la revendication précédente, **caractérisé en ce que** le bras de délimitation (260) comprend une lumière (262) délimitée par la butée (262B) de dernière position et une butée (262A) de première position du châssis de découpe (204), la lumière (262) coopérant avec un plot de blocage (264) monté fixe sur le châssis de découpe (204) de sorte à limiter la rotation du châssis de découpe (204) entre la première position et la dernière position.

9. Chariot coupe lien (200) selon l'une quelconque des revendications précédentes, **caractérisé en ce que** le détecteur de présence (230) comprend :
- un balancier (232) monté mobile en pivotement sur le châssis de découpe (204) selon un troisième axe de rotation (X3), entre une position de repos et une position finale et comportant un bras (234) s'étendant perpendiculairement au troisième axe de rotation (X3) en ayant une extrémité inférieure (234A) opposée au troisième axe de rotation (X3), qui en position de repos du balancier (232) dépasse la languette d'écartement (210), et
- un capteur de changement de position du balancier (232) émettant un signal de détection de présence lorsque le balancier (232) est situé dans une position de poussée entre la position de repos exclue et la position finale inclue.

10. Chariot coupe lien (200) selon l'une quelconque des revendications précédentes, **caractérisé en ce que** le guide (220) comprend des bandes d'au moins un rouleau rotatif par rapport au châssis de découpe (204) parallèles entre elles et formant la zone d'appui (222) du guide (220).

11. Languette d'écartement (210) pour un chariot coupe lien (200) selon une quelconque des revendications 1 à 10, la languette d'écartement (210) étant configurée pour être montée solidaire sur un châssis de découpe (204) et comprenant une surface de rampe (212) s'étendant d'une extrémité avant (21 0A) à une extrémité arrière (210B) de la languette d'écartement (210), l'extrémité avant (210A) étant configurée pour glisser entre un lien (32) et une surface de référence (30A) d'un lot d'éléments (30) de sorte que la surface de rampe (212) écarte le lien (32) de la surface de référence (30A) du lot d'éléments (30) lors du déplacement du châssis de déplacement (202).

12. Languette d'écartement (210) selon la revendication précédente, **caractérisée en ce qu'**elle comprend une face concave en vis-à-vis du châssis de découpe (204).

13. Languette d'écartement (210) selon la revendication 13 ou 14, **caractérisée en ce qu'**elle est réalisée en acier ressort et présente de préférence une teneur en carbone de 1%.

14. Procédé de découpe d'un lien (32) entourant un lot d'éléments (30) pour les maintenir ensemble, par un chariot coupe lien (200) selon l'une quelconque des revendications 1 à 10 comprenant les étapes suivantes :
- positionnement du chariot coupe lien (200) en vis-à-vis d'une zone d'une surface de référence (30A) du lot d'éléments (30) en amont du lien (32),
- déplacement du chariot coupe lien (200) vers l'avant, selon un axe de translation (Y), en glissant le guide (220) sur la surface de référence (30A) entraînant :
∘ le pivotement du châssis de découpe (204) par rapport au châssis de déplacement (202) de sorte que l'extrémité avant de (21 0A) de la languette d'écartement (210) est en contact avec la surface de référence (30A) du lot d'éléments (30) en fonction du contact du guide (220) avec la languette d'écartement (210),
∘ le glissement de l'extrémité avant (210A) de la languette d'écartement (210) entre le lien (32) et la surface de référence (30A) du lot d'éléments (30), et
o le glissement de la surface de rampe (212) de la languette d'écartement (210) sous le lien (32) et sur la surface de référence (30A) du lot d'éléments (30) jusqu'à la détection du lien (32) par le détecteur de présence (230),
- découpe du lien (32) par la lame de coupe (240).

15. Procédé de découpe selon la revendication précédente, selon lequel le chariot coupe lien (200) est selon la revendication 2 ou selon l'une quelconque des revendications 3 à 10 en combinaison de la revendication 2, dans lequel le pivotement du châssis de découpe (204) par rapport au châssis de déplacement (202) est réalisé sous l'action du moyen de plaquage (206) présentant une pression régulée en fonction de la force exercée par le guide (220) sur la surface de référence (30A) du lot d'éléments (30) de sorte que l'extrémité avant (210A) de la languette d'écartement (210) soit en contact avec la surface de référence (30A) du lot d'éléments (30).

16. Procédé de découpe selon la revendication 14 ou 15, **caractérisé :**
- **en ce que** le chariot coupe lien (200) comprend un actionneur de blocage (250) monté mobile sur le châssis de découpe (204),
- et **en ce que** le procédé de découpe comprend :
∘ après la détection du lien (32) par le détecteur de présence (230) et avant l'étape de découpe, une étape de blocage du lien (232) par le déplacement d'un bloc (252) de l'actionneur de blocage (250) d'une position repos selon laquelle le bloc (252) est écarté du lien (32) jusqu'à une position de pincement du lien (32) contre la languette d'écartement (210), en appliquant une force sur le lien (32) contre la surface de rampe (212) de la languette d'écartement (210), et
∘ après l'étape de découpe, une étape de déplacement du chariot coupe lien (200) entraînant le retrait du lien (32) du lot d'éléments (30), le lien (32) étant pincé entre le bloc (252) de l'actionneur de blocage (250) et la languette d'écartement (210),
∘ après l'étape de déplacement du chariot coupe lien (200), une étape de mise au rebu du lien (32) dans un récipient, en déplaçant le chariot coupe lien (200) au-dessus du récipient et en déplaçant le bloc (252) de l'actionneur de blocage (250) de sa position de pincement à sa position de repos.

17. Procédé de découpe selon l'une quelconque des revendications 14 à 16, **caractérisé :**
- **en ce qu'**il comprend, avant l'étape de déplacement du chariot coupe lien (200) en vis-à-vis d'une zone, une étape de reconnaissance d'un marqueur de positionnement de la surface de référence (30A) du lot d'éléments (30),
- et **en ce que** la zone est déterminée selon l'emplacement du marqueur de positionnement.

18. Procédé de découpe selon la revendication 17, **caractérisé en ce que** l'étape de reconnaissance du marqueur de positionnement est réalisée par un lecteur de marquage tel qu'un lecteur de code barre ou de QR code imprimé sur la surface de référence (30A) du lot d'éléments (30).

19. Procédé de découpe selon l'une quelconque des revendications 14 à 17, **caractérisé en ce qu'**il comprend une étape de transmission d'une information de non-détection lorsque le chariot coupe lien (200) est déplacé en translation au-delà d'une position prédéterminée et/ou lorsque le détecteur de présence (230) n'a pas détecté de lien (32).

20. Machine (10) comprenant :
- un robot (100) comportant une tête de préhension (120) mobile et configurée pour saisir un lot d'éléments (30),
- un chariot coupe lien (200) selon l'une quelconque des revendications 1 à 10, le chariot coupe lien (200) étant monté mobile en translation par rapport à la tête de préhension (120), et
- un actionneur monté sur la tête de préhension (120) pour déplacer en translation le chariot coupe lien (200) sur la tête de préhension (120).

21. Machine (10) selon la revendication précédente, **caractérisée en ce que** le robot (100) comprend une base (110) et un bras articulé (130) monté mobile sur la base (110), la tête de préhension (120) étant montée mobile sur le bras articulé (130).

22. Machine (10) selon la revendication 20 ou 21, **caractérisée en ce que** la tête de préhension (120) comprend un corps principal (122) et des pieds de préhension (124) montés fixes sur une deuxième surface (122B) du corps principal (122) pour saisir la surface de référence (30A) du lot d'éléments (30).

23. Machine (10) selon l'une quelconque des revendications 20 à 22, **caractérisé en ce que** :
- la tête de préhension (120) du robot (100) comprend au moins un rail (126) de guidage agencé dans le corps principal (122), et
- le châssis de découpe (204) du chariot coupe lien (200) comprend des roues de guidage (203) reçues dans le rail (126) de la tête de préhension (120) de sorte que le châssis de découpe (204) translate au moyen de l'actionneur par rapport à la tête de préhension (120).
